# EUROPÄISCHE PATENTANMELDUNG

(11) **EP 4 682 083 A1**
(43) Veröffentlichungstag der Anmeldung: **21.01.2026**
(21) Anmeldenummer: 24221095.3
(22) Anmeldetag: 18.12.2024
(51) Int. Cl.: B65G 1/02, A47B 55/02, A47B 96/02, A47F 5/01

(54) **DRAHTFACHBODEN FÜR EINE REGALANLAGE EINES WARENLAGERS**

(30) Priorität: 19.07.2024 DE 202024104054 U
(71) Anmelder: GI-RO Technik GmbH & Co. KG, 48691 Vreden (DE)
(72) Erfinder: HEINZ, Elferink, 48691 Vreden (DE)
(74) Vertreter: Tarvenkorn, Oliver

(57) **Zusammenfassung**

Drahtfachboden (100) für eine Regalanlage eines Warenlagers, mit mehreren parallelen Verstärkungsprofilen (10), auf denen eine durch Längsdrähte (21;) und Querdrähte (22) gebildete Drahtgitterstruktur (20) angebracht ist, die sich an wenigstens einer Seite längs über die Verstärkungsprofile (10) hinaus erstreckt, und der Überstand einen Auflagerbereich (23) zur Auflage auf einer Regaltraverse (1) ausbildet,
dadurch gekennzeichnet,
- dass der Auflagerbereich (23) an einem horizontalen Abschnitt (33) einer Stützkonsole (30) abgestützt ist,
- dass die Stützkonsole (30) wenigstens einen sich an den horizontalen Abschnitt (31) anschließenden vertikalen Abschnitt (32) aufweist,
- dass die Längsdrähte (21) im Auflagerbereich (23) jeweils an wenigstens einer Verbindungsstelle stoffschlüssig mit der Stützkonsole (30) verbunden sind und
- dass die Stützkonsole (30) in einem mittleren Bereich oder in einer unteren Hälfte der Profilhöhe der Verstärkungsprofile (10) mit diesen verbunden ist.

## Beschreibung

Die Erfindung betrifft einen Drahtfachboden für eine Regalanlage eines Warenlagers mit mehreren parallelen Verstärkungsprofilen, auf denen eine durch Längsdrähte und Querdrähte gebildete Drahtgitterstruktur als Facheindeckung angebracht ist, wobei sich die Drahtgitterstruktur an wenigstens einer Seite längs über die Verstärkungsprofile hinaus erstreckt, und der Überstand einen Auflagebereich zur Auflage auf Regaltraversen einer Regalanlage ausbildet.

Drahtfachböden können anstelle von Gitterrosten in Regalanlagen in Warenlagern eingesetzt werden, sofern keine hohe Tragfähigkeit erforderlich ist. Solche Regalanlagen können insbesondere als Kragarmsystem ausgebildet sein, das den Vorteil hat, dass die Fachebenen durchgängig ohne störende Regalstützen genutzt werden können, was insbesondere zur Aufnahme von Langgut vorteilhaft ist.

Ein anreihbarer Drahtfachboden ist aus der WO2021/160224 A1 bekannt, durch den oberhalb der Verstärkungsprofile und Regaltraversen eine durchgängige Auflageebene geschaffen wird, die sich über mehrere nebeneinander liegende Regalfächer erstrecken kann.

Die Tragfähigkeit der Drahtfachboden ist jedoch begrenzt, da nur die über die Verstärkungsprofile überstehenden Randbereiche der Gitterstruktur auf den

Regaltraversen aufliegen. Damit ist gerade der Übergangsbereich ausgerechnet dort, wo die Verstärkungsprofile enden, durch hohe Biegemomente belastet.

Als bekannte Maßnahme zur Erhöhung der Belastbarkeit sind untergeschweißte Flachverstärkungen und beidseitig abgekantete Endbereiche bekannt. Damit erhöht sich zwar die Belastbarkeit, jedoch bleibt auch mit diesen Maßnahmen der Übergang zur Regaltraverse der schwächste Bereich des Drahtfachbodens unter Lasteinwirkung.

Um die Vorteile von Drahtfachböden auch bei größeren Lasten nutzen zu können, ist es die Aufgabe der Erfindung, einen Drahtfachboden der eingangs genannten Art in den Auflagebereichen und insbesondere am Übergang zur Regaltraverse zu verstärken, wobei die Vorteile einer kostengünstigen Herstellung und einer durchgehenden Auflageebene erhalten bleiben sollen.

Diese Aufgabe wird durch einen Drahtfachboden mit den Merkmalen des Anspruchs 1 gelöst. Dieser sieht unter dem jeweiligen Auflagebereich der Drahtgitterstruktur eine zusätzliche Stützkonsole vor.

Diese besteht beispielweise aus einem durchgängigen Profilabschnitt, der sich über die gesamte Länge des Auflagebereichs erstreckt, kann aber auch aus mehreren einzelnen Stützkonsol-Teilelementen, die sich hintereinander anreihen, zusammengesetzt sein.

Die Stützkonsole besitzt zumindest einen horizontalen Abschnitt, der unterhalb des Auflagebereichs positioniert ist und wenigstens einen sich daran anschließenden vertikalen Abschnitt. Damit ist die Stützkonsole zumindest einfach gewinkelt.

Die auf die Drahtgitterstruktur wirkenden Lasten werden über den größten Teil der Breite des Regalfachs über die Verstärkungsprofile aufgenommen und können dann über die formschlüssig mit den Verstärkungsprofilen verbundenen Stützkonsolen in die Regaltraversen eingeleitet werden. Damit wird der Auflagebereich der oben aufliegenden Drahtgitterstruktur, die die Facheindeckung bildet, und deren Übergang zur Regaltraverse stark entlastet.

Der horizontale Abschnitt der Stützkonsole verläuft bevorzugt in Flucht mit dem oberen Kantenbereich der Verstärkungsprofile. Auf den Verstärkungsprofilen und auf dem horizontalen Abschnitt der Stützkonsole verläuft jeweils wenigstens ein Querdraht der Drahtgitterstruktur und ist damit verbunden. Die Längsdrähte der Drahtgitterstruktur liegen wiederum oben auf den Querdrähten und sind damit verbunden.

Nach den einem Fachmann geläufigen statischen Überlegungen wäre so ein klassisches System aus zwei parallelen horizontalen Stäben zu erhalten, wovon der obere durch die Längsdrähte der Drahtgitterstruktur zu bilden wäre, der bei den im Regal üblichen Belastungen auf Druck belastet wird, und der untere, auf Zug belastete Stab durch den horizontalen Abschnitt der Stützkonsole und den oberen Kantenbereich der Verstärkungsprofile. Die horizontale Stäbe wären durch die Querdrähte verbunden und auf Abstand zueinander gehalten.

Die Erfindung geht hier aber einen anderen Weg, da bevorzugt korrosionsgeschützte Drahtgitterstrukturen aus sendzimirverzinktem Stahldraht eingesetzt werden. Diese werden durch Elektrowiderstandsschweißen an die Oberkanten der Verstärkungsprofile angeheftet, wobei eine starke lokale Aufschmelzung vermieden werden soll, um den Korrosionsschutz nicht zu gefährden. Die Schweißverbindungen sind also nicht so belastbar, wie sie in dem beschriebenen, klassischen statischen System mit Ober- und Untergurt sein müssten.

Nach der Erfindung ist bei einer bevorzugten Ausführungsform zum einen vorgesehen, die Kreuzungspunkte der Längsdrähte mit dem horizontalen Abschnitt der Stützkonsole zu verschweißen. Hierfür kann eine Rippe in die Stützkonsole eingepresst sein, wenn sie aus Stahlblech besteht, so dass eine Art Schweißbuckel am Kreuzungspunkt gebildet ist. Bei einer als Drahtgitterkonsole ausgebildeten Stützkonsole erfolgt die Verbindung an einem Querdraht. Die Längsdrähte sind außerdem über wenigstens einen Querdraht mit den Verstärkungsprofilen verbunden.

Zum anderen besteht die Besonderheit der Erfindung darin, dass zwischen dem horizontalen Abschnitt der Stützkonsole und dem in Flucht liegenden oberen Randbereich der Verstärkungsprofile bewusst auf eine Verbindung verzichtet wird, über die Kräfte übertragen werden könnten. Stattdessen erfolgt die Verbindung der Stützkonsole mit den Verstärkungsprofilen an einem tieferen Punkt, insbesondere unterhalb der Mitte des Profilquerschnitts. Damit bilden die Verbindungspunkte zwischen den Verstärkungsprofilen, der Drahtgitterstruktur und der Stützkonsole ein Kräftedreieck, in welchem sowohl der überstehende Auflagebereich der Gitterstruktur wie auch die zumindest einfach gewinkelte Stützkonsole elastisch verformbar sind, sodass hohe Lasten partiell durch elastische Verformung ausgeglichen werden können und hohe mechanische Belastungen der Schweißpunkte vermieden werden.

Wie bereits ausgeführt, kann die Stützkonsole als Stahlprofil oder als Drahtgitter ausgebildet sein.

Bei einer Stahlprofil-Stützkonsole ist ein mehrfach gewinkeltes Profil bevorzugt, das einen Einsteckschenkel aufweist, der in eine schlitzförmige Ausnehmung im Verstärkungsprofil eingepresst wird.

Nach einer ersten Ausführungsform einer Stahlprofil-Stützkonsole ist der Einsteckschenkel parallel zum oberen horizontalen Abschnitt und wird in eine Ausnehmung an der Stirnseite des Verstärkungsprofils eingesetzt.

Nach einer zweiten Ausführungsform einer Stahlprofil-Stützkonsole ist ein Zwischenschenkel vorgesehen, der sich unten an den vertikalen Abschnitt anschließt und ein Stück parallel zur Unterkante des Verstärkungsprofils verläuft bevor er in einem nach oben gerichteten Einsteckschenkel endet, der von unten in eine Ausnehmung an der Unterseite des Verstärkungsprofils eingesetzt wird.

Möglich ist weiterhin, eine Stahlprofil-Stützkonsole als Doppelwinkel auszubilden, und den untern Schenkel an die Unterkante des Verstärkungsprofils anzuschweißen.

Wenn die Stützkonsole als Drahtgitter-Einhängekonsole ausgebildet ist, umfasst sie mehrere parallel zueinander und zu den Verstärkungsprofilen ausgerichtete, im Querschnitt gewinkelte Basisdrähte, die untereinander durch wenigstens einen sich quer zu den Basisdrähten erstreckenden Querdraht verbunden sind. Wenigstens ein Querdraht am oberen, horizontalen Abschnitt ist mit dem Auflagebereich der Drahtgitterstruktur verbunden. Die Stützkonsole greift außerdem mit wenigstens zwei parallelen Querdrähten in Ausklinkungen der Verstärkungsprofile ein, die insbesondere von der Unterkante aus oder aus einem Eckbereich heraus in eine untere Hälfte der Verstärkungsprofile eingebracht sind.

Die Stützkonsole kann an der Außenkante ihres oberen horizontalen Abschnitts mit einem vertikal aufragenden Abschnitt ergänzt werden, um eine Durchschubsicherung zu bilden.

Schließlich ist eine Weiterbildung des erfindungsgemäßen Drahtfachboden möglich, der sich über mindestens zwei Regalfächer erstreckt und dabei über mindestens eine Regaltraverse hinweg läuft. Hierzu ist eine Mittenstützkonsole vorgesehen, die zwei spiegelbildlich ausgerichtete Stützkonsolen, wie sie vorstehend beschrieben wurden, über einen gemeinsamen horizontalen Abschnitt im Auflagebereich vereint.

Die Erfindung wird nachfolgend mit Bezug auf die in den Zeichnungen dargestellten Ausführungsbeispiels erläutert. Die Figuren zeigen im Einzelnen:
- Fig. 1: einen Drahtfachboden in perspektivischer Ansicht von schräg oben;
- Fig. 2: den Drahtfachboden in Ansicht von oben;
- Fig. 3: ein Detail des Drahtfachbodens aus Figur 1 in vergrößerter perspektivischer Ansicht;
- Fig. 4A, 4B: einen auf einer Regaltraverse aufliegenden Randbereich des Drahtfachbodens in seitlicher Ansicht; jeweils mit und ohne Belastung.
- Fig. 5: Einzelteile vor der Montage des Drahtfachbodens in seitlicher Ansicht;
- Fig .6: Teile eines fertigen Drahtfachboden nach der Montage, in seitlicher Ansicht;
- Fig. 7: Teile eines Drahtfachboden nach einer zweiten Ausführungsform, in seitlicher Ansicht;
- Fig. 8: Teile eines Drahtfachboden nach einer dritten Ausführungsform, in seitlicher Ansicht;
- Fig. 9: Teile eines Drahtfachboden nach einer vierten Ausführungsform, in seitlicher Ansicht;
- Fig. 10: einen sich über zwei Regalfelder erstreckenden, einteiligen Drahtfachboden, in seitlicher Ansicht;
- Fig. 11: einen sich über zwei Regalfelder erstreckenden, zweiteiligen Drahtfachboden, in seitlicher Ansicht;
- Fig. 12: eine Mittenstützkonsole für die Drahtfachböden gemäß Figuren 10, 11 in seitlicher Ansicht;
- Fig. 13: einen Drahtfachboden mit einhängbarem Wärmestaublech;
- Fig. 14: einen Drahtfachboden mit einhängbarer Befestigungsklammer; und
- Fig. 15: Teile eines Drahtfachboden nach dem Stand der Technik, in seitlicher Ansicht.

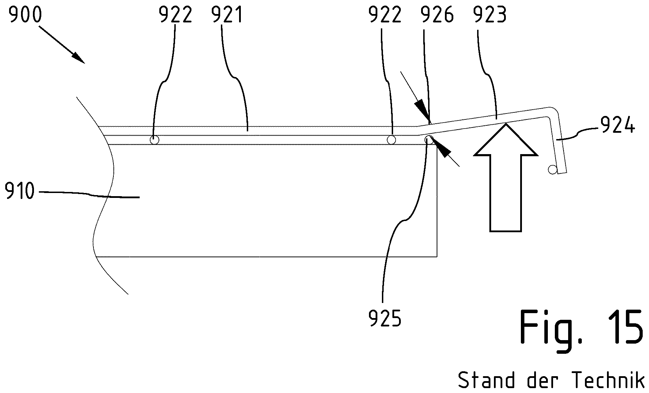

Die der Erfindung zugrunde liegende Problematik wird anhand der Figur 15 erläutert. Diese Abbildung zeigt Teile eines Drahtfachboden 900 nach dem Stand der Technik, in seitlicher Ansicht.

Ein herkömmlicher Drahtfachboden 900 hat eine Gitterstruktur, die durch miteinander verbundene Längs- und Querdrähte 921, 922, 925 gebildet ist. Die Querdrähte sind 922, 925 an Verstärkungsprofile 910 angeschweißt. Ein Überstand der Längsdrähte 921 über die Verstärkungsprofile 910 hinaus bildet einen Auflagebereich 923, mit dem der Drahtfachboden 900 im Gebrauch unmittelbar auf der Oberseite einer Regaltraverse aufliegt. Die Auflagerreaktion ist hier als nach oben weisender Blockpfeil dargestellt. Die maximale Biegebeanspruchung wird an einer ersten Verbindungsstelle 926 von Längsdrähten 921 und Verstärkungsprofilen 910 hervorgerufen. Die Verbindungsstelle 926 befindet sich neben dem als Hebel wirkenden Auflagebereich 923 und ist durch die Schweißverbindungen des äußersten Querdrahts 925 mit den Längsdrähten 921 einerseits und den Verstärkungsprofilen 910 andererseits gebildet. Die Schweißverbindungen wirken bei sich kreuzenden Runddrähten bzw. Runddrähten und schmalen Blechprofilen regelmäßig nur punktuell und werden stark auf Zug beansprucht, wenn Güter auf dem Drahtfachboden aufgelegt sind. Wenn dann noch dynamische Lasten hinzukommen, beispielsweise beim Aufsetzen einer Masse auf den Drahtfachboden 900, können die Schweißverbindungen versagen, was aufgrund der nur kleinen Kreuzungsstelle nicht einmal immer optisch wahrnehmbar ist.

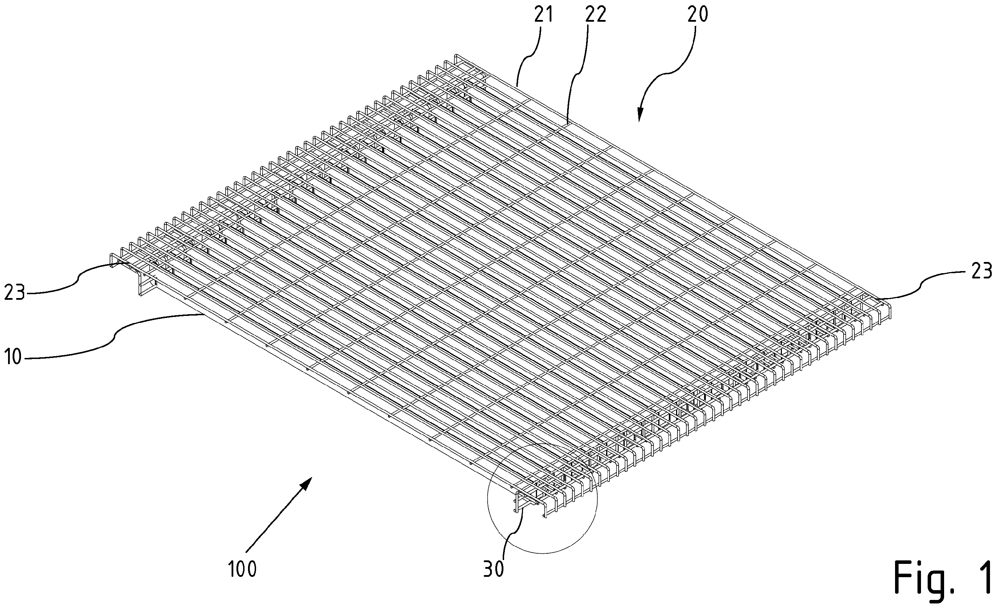

In Figur 1 ist ein erfindungsgemäßer Drahtfachboden 100 in perspektivischer Ansicht von schräg oben dargestellt. Eine Drahtgitterstruktur 20 wird von miteinander verbundenen Längs- und Querdrähten 21, 22 gebildet. Darunter sind Verstärkungsprofile 10 angebracht. Ein Überstand der Längsdrähte 21 über die Verstärkungsprofile 10 an den jeweiligen Außenseiten bildet jeweils einen Auflagebereich 23, mit dem der Drahtfachboden 100 im Gebrauch unmittelbar auf der Oberseite einer Regaltraverse aufliegt. Unterhalb der Auflagebereiche 23 ist jeweils eine Stützkonsole 30 angebracht, die hier als Drahtgitter-Einhängekonsole ausgebildet ist.

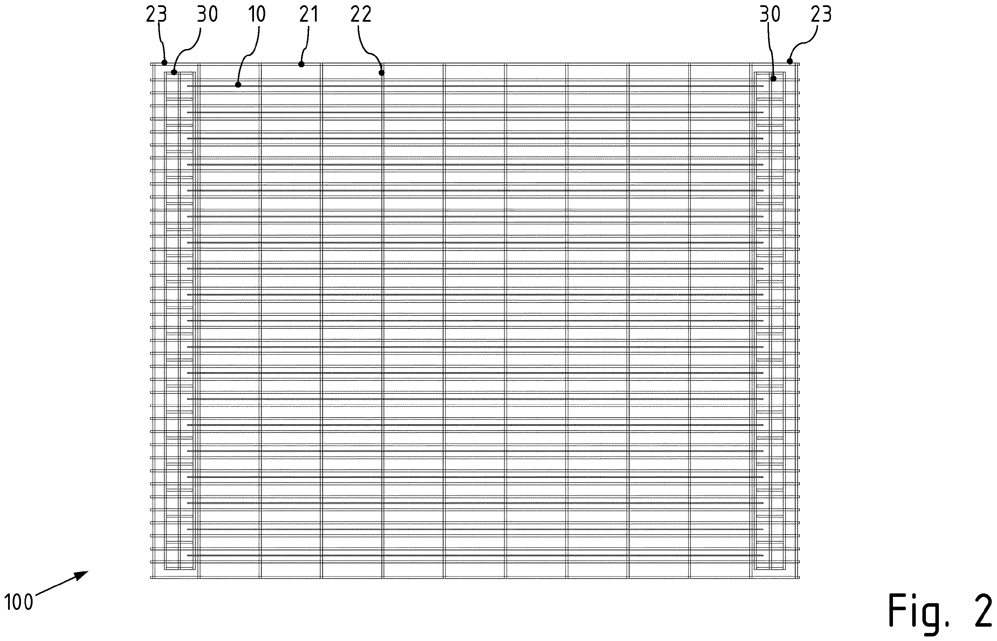

Figur 2 zeigt den Drahtfachboden 100 in Ansicht von oben, wobei der Verlauf der Stützkonsolen 30 unterhalb der Auflagebereiche 23 deutlich wird. Die Verstärkungsprofile 10 sind hier mit einem solchen Abstand zueinander angeordnet, dass zwischen zwei benachbarten Verstärkungsprofilen 10 immer zwei Längsdrähte 21 liegen.

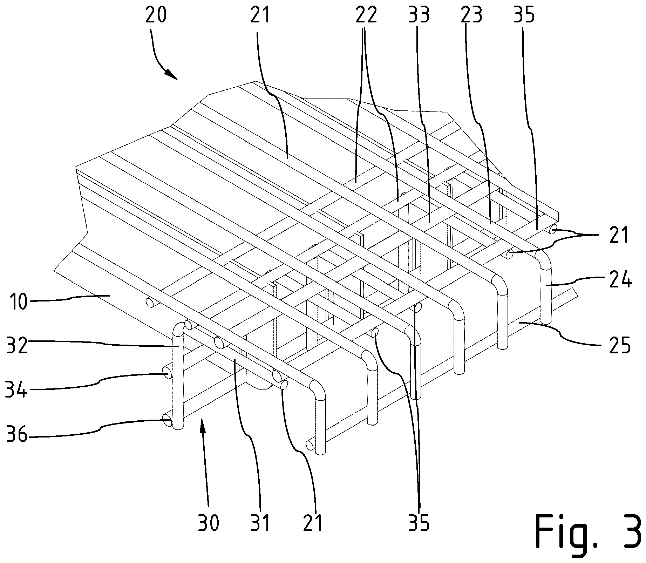

In Figur 3 ist der in Figur 1 mit dem Kreis markierte Bereich des Drahtfachbodens 100 in Vergrößerung gezeigt. Die Längsdrähte 21 der Drahtgitterstruktur 20 sind jenseits des Auflagerbereichs 23 nach unten abgewinkelt und durch einen Querdraht 25 untereinander verbunden. Der so gebildete vertikale Endabschnitt 24 trägt zur Aussteifung des Auflagerbereichs 23 bei.

Die Stützkonsole 30 ist aus einer Vielzahl von gewinkelten und zueinander parallelen Basisdrähten gebildet, die durch zwei Querdrähte 33, 35 oben und zwei Querdrähte 34, 36 unten zu einer Gitterstruktur verbunden sind. Die Stützkonsole 30 besitzt im Querschnitt gesehen einen oberen horizontalen Abschnitt 31 unmittelbar unter dem Auflagebereich 23 und einen vertikalen Abschnitt 32, der mit den Querdrähten 34, 36 formschlüssig in eine Ausnehmung in den Verstärkungsprofilen 10 eingreift.

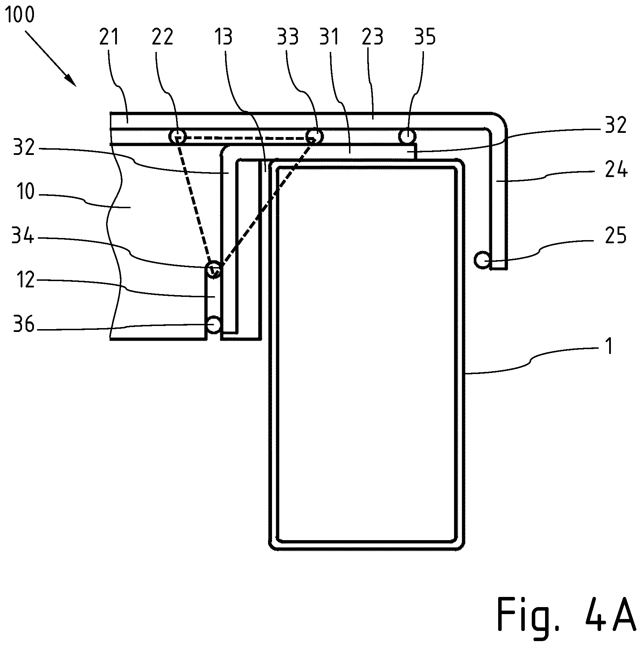

Figur 4A zeigt den auf einer Regaltraverse 1 aufliegenden Randbereich des Drahtfachbodens 100 in einer Seitenansicht. Zum einen wird hieraus der formschlüssige Eingriff der Querdrähte 34, 36 des vertikalen Abschnitts 32 in eine Ausnehmung 12 in den Verstärkungsprofilen 10 deutlich. Der für die Kraftableitung wichtige Bereich der Stützkonsole 30 endet bei dem rechten Querdraht 33. Der sich rechts davon anschließende Randbereich des Drahtfachbodens 100 mit dem Rest des Auflagebereichs 23 und dem vertikalen Endabschnitt 24 spielt für die Tragfähigkeit keine große Rolle.

Der vertikale Abschnitt 32 verläuft im dargestellten Ausführungsbeispiel nicht direkt entlang der Seitenflächen der Regaltraverse 1, sondern versetzt dazu. Es verbleibt ein Spalt 13 dazwischen wie auch zwischen der Stirnseite des Verstärkungsprofils 10 und der Regaltraverse 1. Dadurch liegt der elastisch verformbare Eckbereich der Stützkonsole 30 zwischen den Abschnitten 31, 32 in demjenigen Kräftedreieck, das durch die gestrichelten Linien angedeutet ist. Das Kräftedreieck wird aufgespannt durch:
- den formschlüssig in die Ausnehmung 12 eingreifenden Querdraht 34 der Stützkonsole 30;
- den zu dem Spalt 13 benachbarten Querdraht 33 am Auflagerbereich 23 und
- den zu dem Spalt 13 benachbarten Querdraht 22 am Verstärkungsprofil 10.

Wie oben beschrieben, besteht nach der Erfindung über den Spalt 13 hinweg keine lastableitende Verbindung zwischen dem horizontalen Abschnitt 31 der Stützkonsole 30 und dem in Flucht dazu liegenden Bereich der Oberkante des Verstärkungsprofils 10. Dem auf die Stützkonsole 30 wirkenden Biegemoment wird durch die paarweise Anordnung der Querdrähte 34, 36 in der Ausnehmung 12 entgegengewirkt.

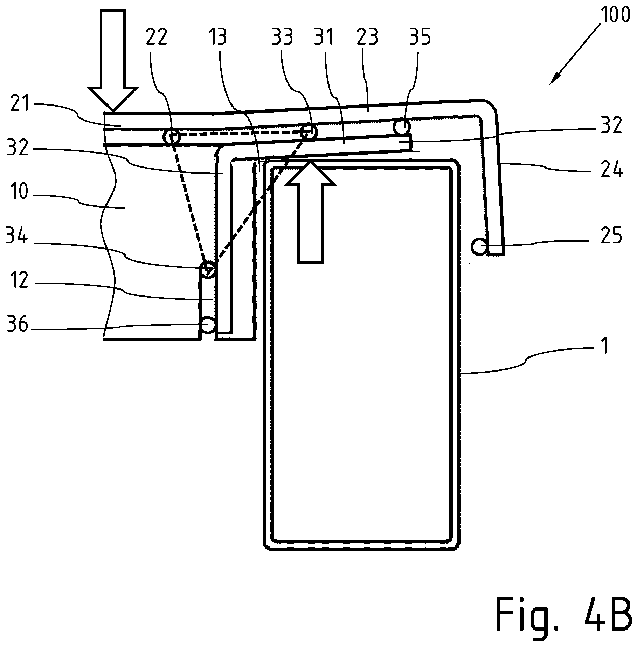

In Figur 4B ist die gleiche Situation noch einmal unter starker Belastung gezeigt, wobei die sich unter Last ergebenden, elastischen Verformungen an Stützkonsole 30 und Auflagebereich 23 zur Veranschaulichung stark überzeichnet sind. Veranschaulicht werden soll, dass bei der Erfindung eine elastische Verformung im Kräftedreieck überhaupt ermöglicht ist und diese nicht im Übergangsbereich, der hier durch den Spalt 13 gebildet ist, behindert wird. Während im Stand der Technik (vgl. Fig. 15) die gesamte Last auf den ersten Querdraht am Rand und dessen Schweißverbindungen wirkt, bewirken die Auflagerreaktionen bei der Erfindung eine elastische Verformung der gewinkelten Basisdrähte der Stützkonsole 30, wodurch ein Großteil der Kräfte aufgenommen wird. Nur geringe Kraftanteile wirken noch auf die Schweißverbindungen an Kreuzungsstellen, von denen es nach der Erfindung zudem mindestens drei gibt, nämlich die Verbindung des Querdrahts 22 am Rand mit Verstärkungsprofil 10 und Längsdraht 21 und die jeweiligen Verbindungen der beiden Querdrähte 33 der Stützkonsole 30 mit je zwei in Längsrichtung verlaufenden Drahtabschnitten.

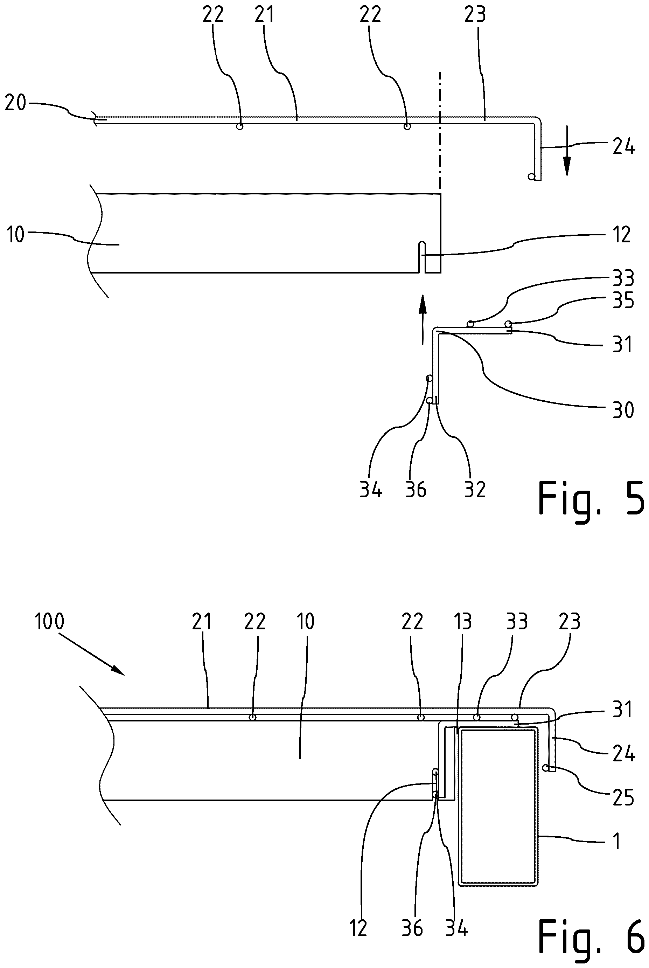

Figur 5 zeigt die Situation vor der Montage des Drahtfachbodens 100. Die Stützkonsole 30 wird mit den Querdrähten 34, 36 von unten in die Ausnehmung 12 im Verstärkungsprofil 10 geschoben. Ein Untermaß zwischen der Breite der Ausnehmung 12 und dem Durchmesser der Querdrähte 34, 36 kann vorgesehen sein, um die Verbindung während der weiteren Montage reibschlüssig aufrecht zu halten.

Die Drahtgitterstruktur 20 wird danach von oben aufgelegt. Durch Widerstandsschweißen werden die Querdrähte 22 mit der Oberkante des Verstärkungsprofils 10 und der Auflagerbereich 23 der Längsdrähte 21 mit den Querdrähten 33 und 35 der Stützkonsole 30 verbunden, so dass sich der in Figur 6 nochmals ausschnittsweise gezeigte, auf einer Regaltraverse 1 aufliegende Drahtfachboden 100 ergibt.

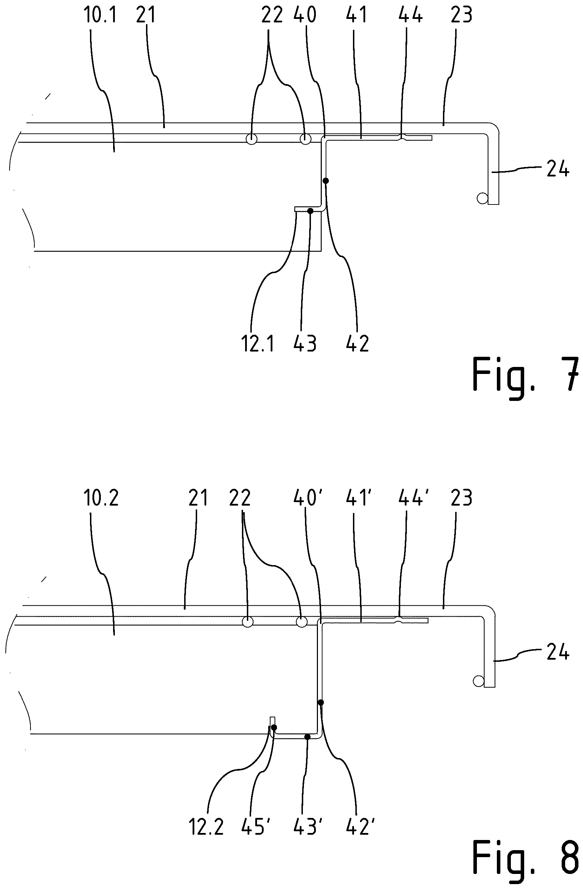

Figur 7 zeigt Ausschnitte einer zweiten Ausführungsform eines Drahtfachbodens in seitlicher Ansicht. Eine Stützkonsole 40 ist als Stahlprofil-Doppelwinkel ausgebildet, mit einem horizontalen oberen Abschnitt 41, einem vertikalen Abschnitt 42 und einem Einsteckschenkel 43, der in eine stirnseitige Ausnehmung 12.1 in einem Verstärkungsprofil 10.1 eingreift. Eine Rippe 44 im horizontalen Abschnitt 41 erleichtert die Schweißverbindung an den Kreuzungspunkten mit den Längsdrähten 21.

Figur 8 zeigt Ausschnitte einer dritten Ausführungsform eines Drahtfachbodens in seitlicher Ansicht. Eine Stützkonsole 40' ist wiederum als Stahlprofil ausgebildet. Diese umfasst einen horizontalen oberen Abschnitt 41', einen vertikalen Abschnitt 42', einen Zwischenabschnitt 43', der an der Unterkante eines Verstärkungsprofils 10.2 verläuft und einen Einsteckschenkel 45', der in eine Ausnehmung 12.2 im Verstärkungsprofil 10.2 eingreift, die sich zur Unterkante hin öffnet. Eine Rippe 44' im horizontalen Abschnitt 41' erleichtert die Schweißverbindung an den Kreuzungspunkten mit den Längsdrähten 21 der Drahtgitterstruktur 20. Zwischen dem vertikalen Abschnitt 42' und der Stirnseite der Verstärkungsprofile 10.2 besteht keine lastabtragende Verbindung.

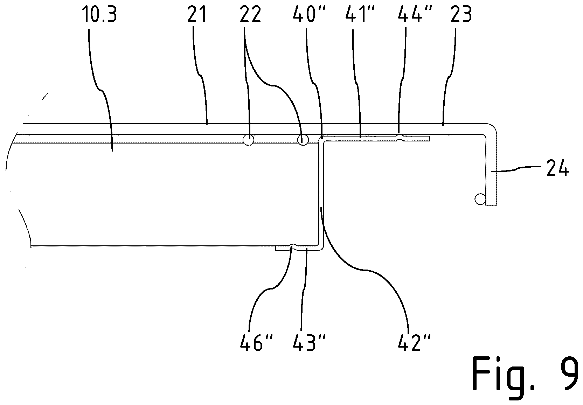

Figur 9 zeigt Ausschnitte einer vierten Ausführungsform eines Drahtfachbodens in seitlicher Ansicht. Eine Stützkonsole 40" ist als Stahlprofil ausgebildet. Diese umfasst einen horizontalen oberen Abschnitt 41", einen vertikalen Abschnitt 42" und einen horizontalen unteren Abschnitt 43", der ein Stück entlang der Unterkante eines Verstärkungsprofils 10.3 verläuft und mit diesem verschweißt ist. Dazu ist eine eingeprägte Rippe 46" vorgesehen. Eine Rippe 44" im horizontalen Abschnitt 41" erleichtert die Schweißverbindung an den Kreuzungspunkten mit den Längsdrähten 21 der Drahtgitterstruktur 20. Zwischen dem vertikalen Abschnitt 42" und der Stirnseite der Verstärkungsprofile 10.3 besteht keine lastabtragende Verbindung.

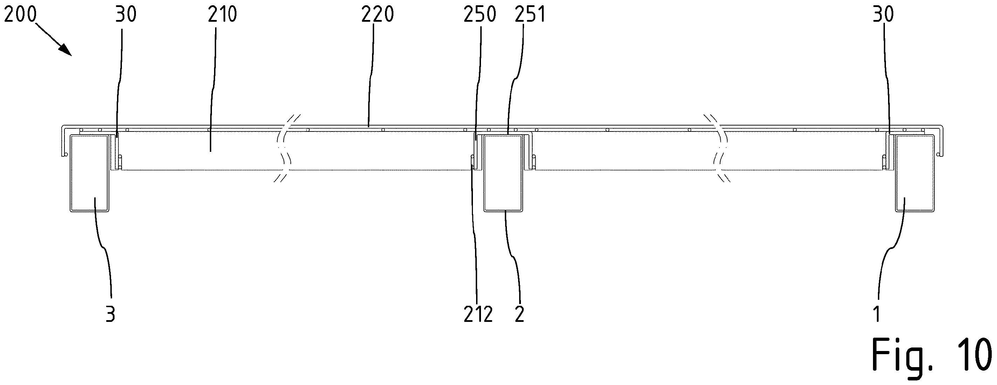

In Figur 10 sind zwei Regalfelder nebeneinander gezeigt, die zwischen insgesamt drei Regaltraversen 1, 2, 3 ausgebildet sind. Ein Drahtfachboden 200 ist durch eine Drahtgitterstruktur 220 gebildet, die mit einer Anordnung von vielen parallelen Verstärkungsprofilen 210 verbunden ist, wobei jeweils zwei Verstärkungsprofile 210 in Flucht liegen. Randseitig ist jeweils die zuvor mit Bezug auf die Figuren 1 bis 6 beschrieben Drahtgitter-Stützkonsole 30 vorgesehen. In der Mitte zwischen dem Paar von Verstärkungsprofilen 210 ist eine Mittenstützkonsole 250 vorgesehen, über die der Drahtfachboden 200 auf der mittleren Regaltraverse 2 abgestützt ist.

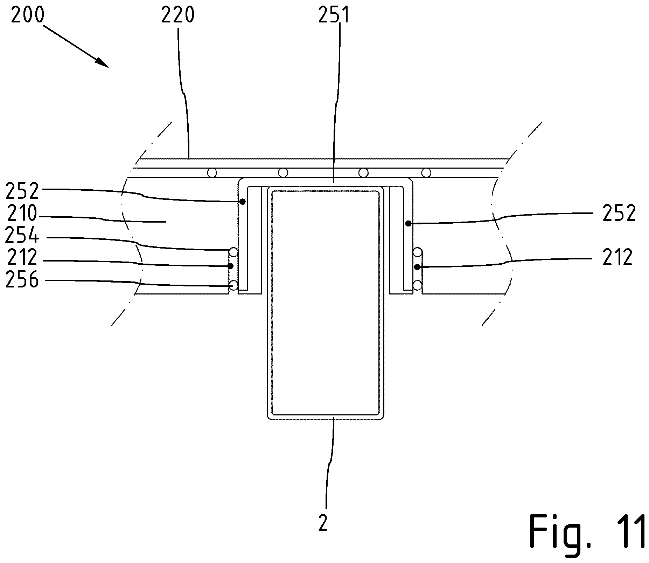

Figur 11 zeigt den Bereich der Mittenstützkonsole 250 in Vergrößerung. Die Mittenstützkonsole 250 ist aufgebaut wie zwei spiegelbildlich ausgerichtete Stützkonsolen 30, die über einen gemeinsamen horizontalen Abschnitt 251 im Auflagebereich auf der Regaltraverse 2 vereinigt sind. Die Mittenstützkonsole 250 ist aus einer Vielzahl von gewinkelten und zueinander parallelen Basisdrähten gebildet, die zu einer Gitterstruktur verbunden sind. Die Mittenstützkonsole 250 besitzt im Querschnitt gesehen einen oberen horizontalen Abschnitt 251 und rechtwinklig dazu angestellt, zueinander parallele vertikale Abschnitte 252. Die Abschnitte 252 greifen jeweils mit ihren Querdrähten 254, 256 formschlüssig in eine Ausnehmung 212 in den Verstärkungsprofilen 210 ein.

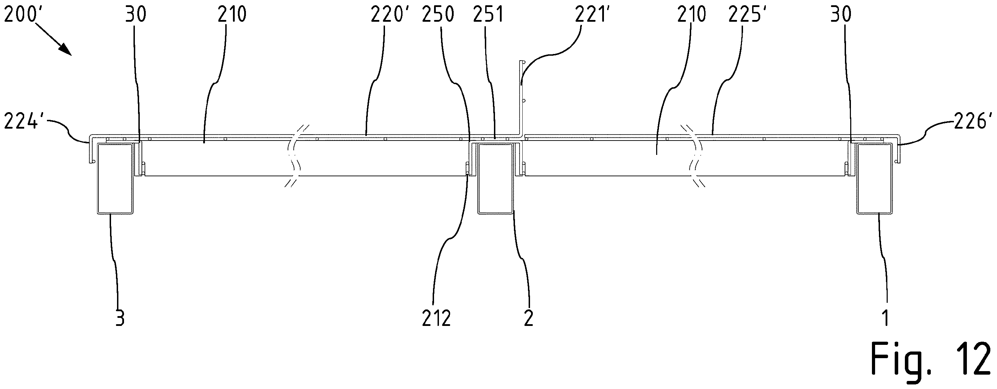

Fig. 12 zeigt ebenfalls einen sich über zwei Regalfelder erstreckenden Drahtfachboden 200' in seitlicher Ansicht. Randseitig ist auch hier jeweils die bereits beschriebene Drahtgitter-Stützkonsole 30 vorgesehen. In der Mitte zwischen dem Paar von Verstärkungsprofilen 210 ist die Mittenstützkonsole 250 mit dem Abschnitt 251 vorgesehen, über die der Drahtfachboden 200' auf der mittleren Regaltraverse 2 abgestützt ist.

Im Gegensatz zu dem Drahtfachboden 200 aus Figur 10 und 11 ist der Drahtfachboden 200' zweiteilig ausgebildet. Ein erster Abschnitt, in Figur 12 links, umfasst eine Drahtgitterstruktur 220', die sich zwischen den Regaltraversen 2, 3 erstreckt. Sie endet am linken Ende mit einem abgewinkelten Endabschnitt 224' und rechts, oberhalb der Mittenkonsole 250, an einer Aufkantung 221', die als Durchschiebesicherung oder zur Fachteilung dient. Ein zweiter Abschnitt, in Figur 12 rechts, umfasst eine Drahtgitterstruktur 225', die neben der Aufkantung 221' beginnt und rechts mit einem abgewinkelten Endabschnitt 226' an der rechten Regaltraverse 1 endet.

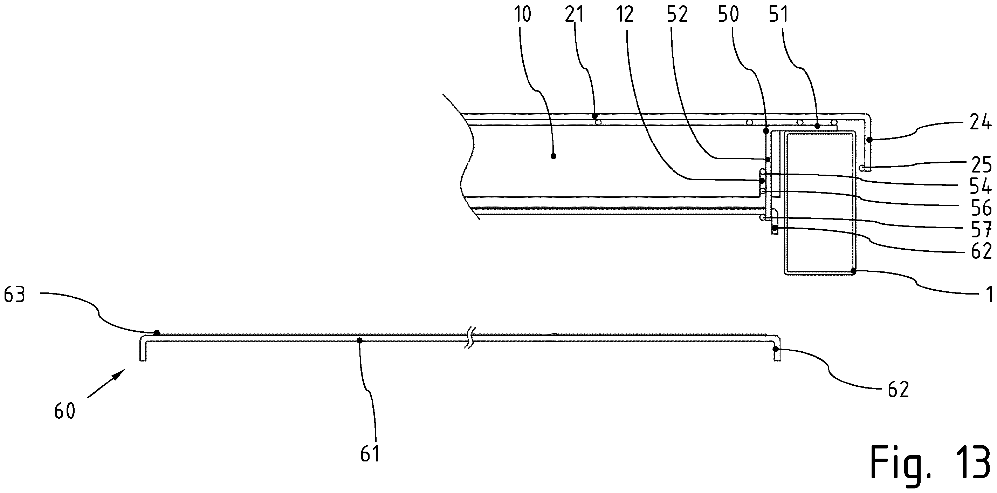

In Figur 13 ist eine abgewandelte Stützkonsole 50 an einem Drahtfachboden gezeigt. Die Stützkonsole 50 besitzt im Querschnitt gesehen einen oberen horizontalen Abschnitt 51 und einen vertikalen Abschnitt 52, der mit seinen Querdrähten 54, 56 formschlüssig in eine Ausnehmung 12 in den Verstärkungsprofilen 10 eingreift. Der vertikale Abschnitt 52 ist länger als bei den zuvor beschriebenen Stützkonsolen 30 und reicht bis unterhalb der Unterkante der Verstärkungsprofile 10. Er besitzt mindestes zwei Querdrähte 54, 56, mit der die Stützkonsole 50 formschlüssig in der Ausnehmung 12 in den Verstärkungsprofilen 10 festgelegt ist, und mindestens einen Querdraht 57 darunter. Der unterste Querdraht 57 dient zum Einhängen von Zubehörteilen. Beispielsweise kann als Zubehörteil ein Wärmestaublech 60 eingehängt werden. Dieses besitzt mehrere parallele Längsdrähte 61, die beidseits je einen abgewinkelten Endabschnitt 62 aufweisen und die an eine Blechplatte 63 angeschweißt sind. Mit dem abgewinkelten Endabschnitt 62 kann das Wärmestaublech 60 am Querdraht 57 eingehängt werden.

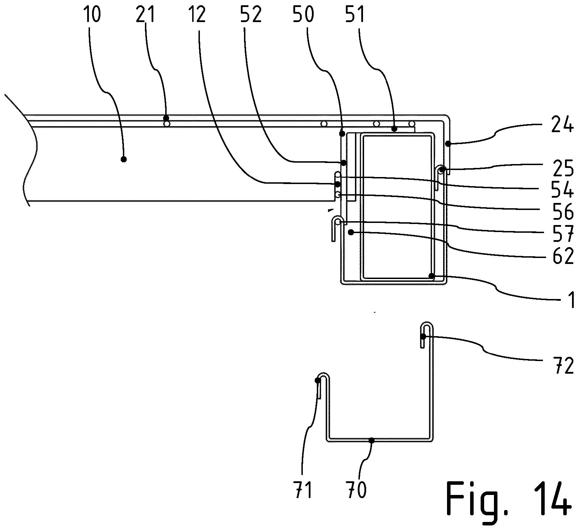

Ein weiteres Zubehörteil in Form einer Befestigungsklammer 70 ist in Figur 14 gezeigt. Die Befestigungsklammer 70 dient dazu, den aufgelegten Drahtfachboden an der Regaltraverse 1 gegen Ausheben zu sichern. Sie besteht aus einem einzelnen Draht oder aus einem Blechzuschnitt mit zwei U-förmig umgebogenen Endabschnitten 71, 72, kann aber auch als dreidimensionale Drahtgitterstruktur gebildet sein.

Mit dem Endabschnitt 71 ist die Befestigungsklammer 70 am untersten Querdraht 57 des verlängerten vertikalen Abschnitts 52 der randseitigen Stützkonsole 50 eingehängt. Der andere Endabschnitt 72 ist an dem untersten Querdraht 25 des vertikalen Endabschnitts 24 des Drahtfachbodens eingehängt.

## Patentansprüche

1. Drahtfachboden (100; 200; 200') für eine Regalanlage eines Warenlagers, mit mehreren parallelen Verstärkungsprofilen (10; 10.1; 10.2; 10.3; 210), auf denen eine durch Längsdrähte (21; 221) und Querdrähte (22; 25) gebildete Drahtgitterstruktur (20; 220; 220', 225') als Facheindeckung angebracht ist,
wobei sich die Drahtgitterstruktur (20; 220; 220', 225') an wenigstens einer Seite längs über die Verstärkungsprofile (10; 10.1; 10.2; 10.3; 210) hinaus erstreckt, und der Überstand einen Auflagerbereich (23) zur Auflage auf Regaltraversen (1, 2, 3) einer Regalanlage ausbildet,
**dadurch gekennzeichnet,**
- **dass** der Auflagerbereich (23) an einem horizontalen Abschnitt (33; 41; 41'; 41") einer Stützkonsole (30, 40; 40'; 40"; 50; 250) abgestützt ist,
- **dass** die Stützkonsole (30, 40; 40'; 40"; 50; 250) wenigstens einen sich an den horizontalen Abschnitt (31; 41; 41'; 41"; 251) anschließenden vertikalen Abschnitt (32; 42; 42'; 42"; 252) aufweist,
- **dass** die Längsdrähte (21; 221) im Auflagerbereich (23) jeweils an wenigstens einer Verbindungsstelle stoffschlüssig mit der Stützkonsole (30, 40; 40'; 40") verbunden sind und
- **dass** die Stützkonsole (30, 40; 40'; 40") in einem mittleren Bereich oder in einer unteren Hälfte der Profilhöhe der Verstärkungsprofile (10; 10.1; 10.2; 10.3; 210) mit diesen verbunden ist.

2. Drahtfachboden (100) nach Anspruch 1, **dadurch gekennzeichnet, dass** zwischen der Stützkonsole (30, 40; 40'; 40"; 50, 250) und dem oberen Randbereich der Verstärkungsprofile (10; 10.1; 10.2; 10.3; 210) keine lastableitende Verbindung besteht.

3. Drahtfachboden nach Anspruch 1 oder 2, **dadurch gekennzeichnet, dass** die Stützkonsole (40; 40'; 40") als Stahlblechwinkel ausgebildet ist.

4. Drahtfachboden nach Anspruch 3, **dadurch gekennzeichnet, dass** die Verbindung der Stützkonsole (40; 40'; 40") zur Drahtgitterstruktur (20) und/ oder zu den Verstärkungsprofilen (10.1; 10.2; 10.3) über wenigstens eine Profilrippe (44; 44'; 44") hergestellt ist.

5. Drahtfachboden nach Anspruch 3 oder 4, **dadurch gekennzeichnet, dass** die Verbindung der Stützkonsole (40; 40') zu den Verstärkungsprofilen (10.2; 10.3) über einen Einsteckschenkel (43; 45') hergestellt ist, der in eine schlitzförmige Ausnehmung (12.1; 12.2) im Verstärkungsprofil (10.1; 10.2) eingesetzt ist.

6. Drahtfachboden nach Anspruch 6, **dadurch gekennzeichnet, dass** die schlitzförmige Ausnehmung (12.1) in die Stirnseite des Verstärkungsprofils (10.1) eingebracht ist.

7. Drahtfachboden nach Anspruch 6, **dadurch gekennzeichnet, dass** die schlitzförmige Ausnehmung (12.2) in die Unterkante des Verstärkungsprofils (10.2) eingebracht ist.

8. Drahtfachboden (100) nach Anspruch 1 oder 2, **dadurch gekennzeichnet,**
- **dass** die Stützkonsole (30; 50; 250) als Drahtgitter-Einhängekonsole ausgebildet ist, die mehrere parallel zueinander und zu den Verstärkungsprofilen (10; 210) ausgerichtete, im Querschnitt wenigstens einfach gewinkelte Basisdrähte (35) aufweist, die untereinander durch wenigstens zwei sich quer zu den Basisdrähten (35) erstreckende Querdrähte (33, 34, 35, 36; 54, 56, 57; 254, 256) verbunden sind und
- **dass** die Stützkonsole (30; 50; 250) über wenigstens einen Querdraht (33, 34) mit den Längsdrähten (21; 221) im Auflagerbereich (23) verbunden sind.

9. Drahtfachboden (100; 200) nach Anspruch 8, **dadurch gekennzeichnet, dass** die Stützkonsole (30; 50; 250) zumindest mit einem Paar von Querdrähten (34, 36; 54, 56; 254, 256) in eine Ausnehmung (12; 212) in den Verstärkungsprofilen (10; 210) eingreift.

10. Drahtfachboden nach Anspruch 8 oder 9, **dadurch gekennzeichnet, dass** sich die Ausnehmungen (12; 212) von der Unterkante des Verstärkungsprofils (10; 210) nach oben erstrecken.

11. Drahtfachboden (200; 200') nach einem der Ansprüche 1 bis 10, **dadurch gekennzeichnet,**
- **dass** eine Drahtgitterstruktur (220; 220', 225') mit einer Anordnung von mehreren parallelen Verstärkungsprofilen (210) verbunden ist, wobei jeweils wenigstens zwei Verstärkungsprofile (210) in Flucht liegen;
- **dass** die Drahtgitterstruktur (220; 220', 225') randseitig jeweils mit wenigstens einer Stützkonsole (30; 40; 40'; 40"; 50) nach einem der Ansprüche 3 bis 10 verbunden ist und damit auf Regaltraversen (1, 3) auflegbar ist und
- **dass** in der Mitte zwischen dem Paar von Verstärkungsprofilen (210) eine Mitten-Stützkonsole (250) vorgesehen ist, über die der Drahtfachboden (200; 200') auf einer Regaltraverse (2) abstützbar ist.

12. Drahtfachboden (200) nach einem der Ansprüche 8 bis 11, **dadurch gekennzeichnet, dass** wenigstens eine Stützkonsole (50) einen vertikalen Abschnitt (52) besitzt, der bis unterhalb der Unterkante der Verstärkungsprofile (10) reicht und dort mindestens einen zusätzlichen Querdraht (57) zum Einhängen von Zubehörteilen besitzt.

13. Drahtfachboden nach Anspruch 12, **dadurch gekennzeichnet, dass** ein Wärmestaublech (60) an den zusätzlichen Querdrähten (57) von zueinander beabstandeter Stützkonsolen (50) mit verlängertem vertikalen Abschnitt (52) einhängbar ist, wobei das Wärmestaublech (60) mehrere parallele Längsdrähte (61) besitzt, die mit einer Blechplatte (63) verbunden sind und die beidseits je einen abgewinkelten Endabschnitt (62) aufweisen, mit dem sie jeweils an dem Querdraht (57) einhängbar sind.

14. Drahtfachboden nach Anspruch 12 oder 13, **dadurch gekennzeichnet, dass** eine Befestigungsklammer (70) vorgesehen ist, die aus wenigstens einem Draht oder aus einem Blechzuschnitt besteht und beidseits U-förmig umgebogene Endabschnitte (71, 72) aufweist, wobei ein Endabschnitt (71) am untersten Querdraht (57) des verlängerten vertikalen Abschnitts (52) der randseitigen Stützkonsole (50) einhängbar ist und der andere Endabschnitt (72) an einem Querdraht (25) des Drahtfachbodens einhängbar ist.
